# EUROPÄISCHE PATENTANMELDUNG

(11) **EP 0 843 166 A1**
(43) Veröffentlichungstag der Anmeldung: **20.05.1998**
(21) Anmeldenummer: 97119667.0
(22) Anmeldetag: 10.11.1997
(51) Int. Cl.: G01J 5/04

(54) **Vorrichtung und Verfahren zur Temperaturmessung von Hochtemperatur-Schmelzen, sowie mit einer solchen Temperaturmessvorrichtung ausgestattetes Schmelzgefäss**

(30) Priorität: 14.11.1996 DE 19647174
(71) Anmelder: FUCHS SYSTEMTECHNIK GMBH, D-77731 Willstätt-Legelshurst (DE)
(72) Erfinder: Fuchs, Gerhard, 77694 Kehl-Bodersweier (DE)
(74) Vertreter: Blumbach, Kramer & Partner GbR

(57) **Zusammenfassung**

Mit der Erfindung wird eine berührungslose Temperaturmessung bereitgestellt, bei der der eigentliche Temperatursensor im Abstand zur Schmelze angeordnet ist und sich somit nicht im Schmelzenkontakt befindet. Hierdurch läßt sich eine sehr hohe Lebensdauer des Temperatursensors und damit der Meßvorrichtung insgesamt erreichen. Weiterhin ermöglicht die berührungsfreie Temperaturmessung auch eine kontinuierliche Temperaturüberwachung, so daß stets die aktuellen Schmelzentemperatur genau gemessen werden kann und demzufolge der jeweilige Prozeß unter Optimierung der Schmelzentemperatur oder optimal an die jeweilige Schmelzentemperatur angepaßt geführt werden kann. Damit der Meßkanal zuverlässig von eindringender Schmelze freigehalten wird, wird er vorzugsweise durch ein zum Schmelzgefäß gerichtetes Fluid durchströmt. Dies bringt auch den Vorteil, daß der Meßfleck stets freigeblasen wird und die Schmelze in diesem Bereich umgerührt wird, so daß der Meßfleck tatsächlich jeweils die aktuelle Schmelzentemperatur besitzt. Der Meßkanal wird vorzugsweise gekühlt, so daß eine übermäßige thermische Beanspruchung desselben vermieden wird. Auch wird hierdurch sichergestellt, daß die Temperatur des Meßkanals stets unterhalb derjenigen der Schmelze liegt und die Meßgenauigkeit folglich nicht durch die Kanaltemperatur verfälscht wird.

## Beschreibung

Die Erfindung betrifft eine Vorrichtung und ein Verfahren zur Temperaturmessung von Hochtemperatur-Schmelzen in einem Schmelzgefäß, sowie ein mit einer solchen Temperaturmeßvorrichtung ausgestattetes Schmelzgefäß.

Zur genauen Steuerung von Schmelzenbehandlungsprozessen wie etwa von Einschmelz-, Feinungs- und Gießprozessen, insbesondere bei der Stahlerstellung, ist es wichtig, Informationen über die aktuelle Temperatur der Hochtemperatur-Schmelze zu erhalten. Üblicherweise wird die Temperatur über Wärmebilanzen vorausberechnet, wobei aber je nach Art des Schmelzmaterials, zum Beispiel des Schrotteinsatzes, und des Zustands des Schmelzgefäßes, zum Beispiel dessen Alter, deutliche Abweichungen von den berechneten Ergebnissen möglich sind, selbst dann, wenn diese Einflußgrößen zusätzlich in den Rechner eingegeben und bei der Temperaturschätzung berücksichtigt werden. Es findet daher in manchen Fällen eine sporadische Temperaturmessung zur Erfassung der aktuellen Schmelzentemperatur statt.

Zur momentanen Temperaturmessung können Thermoelemente von Hand oder durch spezielle Vorrichtungen in die Schmelze eingetaucht werden, die zumeist Einweg-Elemente auf der Basis Platin/Platin-Rhodium sind. Bei diesem Eintauchvorgang kann aber die Meßgenauigkeit durch dicke Schlackenschichten verfälscht werden, da dann lediglich die Schlackentemperatur, nicht aber die eigentliche Schmelzentemperatur erfaßt wird. Ein weiterer Nachteil besteht darin, daß der Prozeß im Schmelzgefäß während der Temperaturmessung zeitweilig für die Dauer von zum Beispiel 1 bis 3 Minuten unterbrochen werden muß.

Ein weiteres Problem bei der Temperaturmessung im Schmelzgefäß besteht darin, daß die Schmelzen-Temperatur im Schmelzgefäß sehr hoch ist, so daß die Temperaturmeßvorrichtung einer starken Temperaturbeanspruchung ausgesetzt ist. Die Temperatur in dem Schmelzgefäß ist deutlich höher (um ca. 100° C) als diejenige in den Zwischengefäßen (Tundish) von Stranggießanlagen, insbesondere Stahlstranggießanlagen. Bei Zwischengefäßen bekannte Temperaturmeßmethoden führen daher bei Übertragung auf die Temperaturmessung im Schmelzgefäß zu deutlich verringerter Standzeit. Dieser Effekt wird auch noch dadurch verstärkt, daß die Schmelze und Schlacke in den Zwischengefaßen bereits desoxidiert und weniger aggressiv ist als im Schmelzgefäß, so daß der Temperaturmeßkopf im Schmelzgefäß auch hierdurch einer stark erhöhten Beanspruchung ausgesetzt ist.

Der Erfindung liegt die Aufgabe zugrunde, eine Temperaturmeßvorrichtung zur Temperaturmessung von Hochtemperatur-Schmelzen zu schaffen, die eine verhältnismäßig genaue Temperaturmessung mit hoher Standzeit ermöglicht.

Diese Aufgabe wird mit den im Patentanspruch 1 genannten Merkmalen gelöst.

Mit der Erfindung wird weiterhin ein Verfahren gemäß Patentanspruch 27 geschaffen, das eine relativ genaue Temperaturmessung ohne Notwendigkeit häufigen Austauschs der Meßkomponenten ermöglicht.

Weiterhin wird mit der Erfindung ein mit einer solchen Temperaturmeßvorrichtung ausgestattetes Schmelzgefäß bereitgestellt, bei dem die Temperaturmeßvorrichtung im unteren Bereich des Schmelzgefäßes eingebaut ist.

Vorteilhafte Ausgestaltungen der Erfindungen sind in den Unteransprüchen angegeben.

Mit der Erfindung wird somit eine berührungslose Temperaturmessung bereitgestellt, bei der der eigentliche Temperatursensor im Abstand zur Schmelze angeordnet ist und sich somit nicht im Schmelzenkontakt befindet, das heißt nicht durch die Schmelzenwärme kontaktierend beaufschlagt wird. Hierdurch läßt sich eine sehr hohe Lebensdauer des Temperatursensors und damit der Meßvorrichtung insgesamt erreichen.

Weiterhin ermöglicht die berührungsfreie Temperaturmessung auch eine kontinuierliche Temperaturüberwachung, so daß stets die aktuellen Schmelzentemperatur genau gemessen werden kann und demzufolge der jeweilige Prozeß unter Optimierung der Schmelzentemperatur oder optimal an die jeweilige Schmelzentemperatur angepaßt geführt werden kann.

In bevorzugter Ausgestaltung ist der zwischen dem Temperatursensor und der Schmelze vorhandene Meßkanal an seinem schmelzgefäßseitigen Ende offen, das heißt ist nicht durch ein Fenster verschlossen, das die Temperaturmessung durch Strahlungsabsorption, Alterung, Verschlackung oder dergleichen verfälschen könnte. Allerdings ist es auch möglich, gleichwohl ein Verschlußfenster, zum Beispiel zu Schutzzwecken, am gefäßseitigen Schmelzkanalende vorzusehen.

Als Temperatursensor wird vorzugsweise ein Pyrometer, insbesondere ein optischer, speziell ein Infrarot-Sensor eingesetzt, der die von der Schmelze abgegebene Infrarotstrahlung in ein entsprechendes, insbesondere elektrisches, Ausgangssignal umwandelt, das die aktuelle Schmelzentemperatur anzeigt. Der Temperatursensor ist hierbei so positioniert, daß der von ihm gemessene Meßfleck in der Schmelze liegt, das heißt direkt die Schmelzentemperatur und nicht lediglich die Temperatur der Schmelzenoberfläche gemessen wird. Da die Schmelzenoberseite häufig mit einer Schlackenschicht bedeckt ist, die einen gewissen Wärmeschild darstellt, ist die Temperatur der Oberfläche in der Regel kein exaktes Maß für die tatsächlich interessierende, schmelzeninterne Temperatur. Durch die erfindungsgemäß vorgesehene Messung eines Punkts innerhalb der Schmelze, das heißt unterhalb des üblichen Schmelzenpegels, wird somit eine sehr viel genauere Temperaturmessung erreicht. Der Meßkanal öffnet sich somit in einem Schmelzenbereich, der unterhalb des maximalen Schmelzenspiegels liegt. Damit der Meßkanal zuverlässig von eindringender Schmelze freigehalten wird, wird er vorzugsweise durch ein zum Schmelzgefäß gerichtetes Fluid durehströmt. Dies bringt auch den Vorteil, daß der Meßfleck stets freigeblasen wird und die Schmelze in diesem Bereich umgerührt wird, so daß der Meßfleck tatsächlich jeweils die aktuelle Schmelzentemperatur besitzt. Die Messung eines in der Schmelze liegenden Schmelzflecks bringt gegenüber der Messung eines an der Oberfläche liegenden Meßflecks auch noch den weiteren Vorteil, daß die Meßgenauigkeit nicht durch die jeweilige Oberflächenbeschaffenheit der Schmelzenoberfläche oder Schlackenschicht beeinträchtigt wird. Insbesondere bei Infrarotstrahlung hängt diese nicht nur von der Temperatur des Objekts, sondern auch von der Oberflächenbeschaffenheit ab, wobei rauhe und dunkle Oberflächen mehr Strahlung abgeben als glatte und helle Flächen. Dies liegt am Emissionsvermögen. Bei Schmelzprozessen verändert sich der Oberflächenzustand aber in der Regel, zum Beispiel aufgrund von Oxidationsvorgängen, Schlackenbildung usw. ständig. Ein Versuch, die Oberfläche der Schmelze freizublasen, würde zu sehr starken Messungenauigkeiten führen, da dies kaum produzierbar möglich ist.

Mit der erfindungsgemäßen Temperaturmeßvorrichtung ist es auch möglich, relativ kleine Meßflecke in der Schmelze auszumessen, ohne daß eine besondere Visiervorrichtung für den Meßkopf erforderlich ist. Durch den in aller Regel engen Meßkanal ist nämlich der "Gesichtsfeldwinkel" des Temperatursensors begrenzt, so däß der Meßfleck-Durchmesser auch bei größerem Abstand zwischen dem Meßkopf und dem Meßfleck im wesentlichen demjenigen des Meßkanals entspricht oder nur unwesentlich größer ist als dieser.

Der Meßkanal wird vorzugsweise gekühlt, so daß eine übermäßige thermische Beanspruchung desselben vermieden wird. Auch wird hierdurch sichergestellt, daß die Temperatur des Meßkanals stets unterhalb derjenigen der Schmelze liegt und die Meßgenauigkeit folglich nicht durch die Kanaltemperatur verfälscht wird.

Die Kühlung des Meßkanals kann z. B. durch Sprühkühlung oder querströmendes Fluid oder auch durch elektrisch betriebene Kühlkörper bewirkt werden. Vorzugsweise ist aber der Meßkanal von einem insbesondere konzentrisch angeordneten Kühlrohr umgeben, so daß sich eine Doppelrohrstruktur mit einem ringförmigen, den Meßkanal umgebenden Kühlkanal ergibt.

In bevorzugter Ausgestaltung ist der Meßkanal durch mindestens ein Fluid durchströmbar, das während Meßpausen auch durch ein andersgeartetes Fluid ersetzt werden kann. Diese Fluiddurchströmung verhindert ein Zusetzen des Meßkanals durch Schlacke oder Schmelzenmaterial, was eine Verfälschung der gemessenen Temperatur zur Folge hätte und letztendlich auch den Meßkopf insgesamt zur Funktionsunfähigkeit bringen würde. Darüberhinaus kann durch das Fluid, das aus dem Meßkanal in die Schmelze austritt, eine gewisse Rührwirkung und somit Temperaturvergleichmäßigung, und auch ein Freiblasen des Meßflecks, d. h. ein Abblasen von den Meßfleck zusetzenden, den Temperaturmeßvorgang verfälschenden Partikeln gewährleisten kann. Das Fluid ist während der aktuellen Temperaturmeßphase vorzugsweise ein Inertgas, insbesondere Stickstoff, so daß keinerlei nachteilige Auswirkung auf die Schmelze eintritt. Zwar kann auch in den Schmelznebenphasen dieses Inertgas usw. zugeführt werden, jedoch wird dann stattdessen vorzugsweise Preßluft eingesetzt, die sich mit geringen Kostenaufwand bereitstellen läßt und keinerlei separate Abgasbehandlung erfordert.

In ähnlicher Weise läßt sich das durch den Kühlkanal strömende Kühlfluid, insbesondere Propan, in Abhängigkeit von den Schmelzphasen durch ein anderes Fluid, insbesondere Preßluft, ersetzen, so daß auch hier die vorstehend bereits erläuterten Vorteile erzielt werden.

Vorzugsweise ist der Temperatursensor als solcher außerhalb der Wandung des Schmelzgefäßes angeordnet, so daß er und die mit ihm zu verbindenden elektrischen leitungen gut zugänglich sind. Auch der Anschluß der Fluidleitungen für den Meßkanal und/oder den Kühlkanal kann somit gefäßextern und damit unproblematisch erfolgen. Auch die Wartung ist hierdurch erheblich erleichtert. Weiterhin ist die Temperaturbelastung des Meßknopfs verringert.

Der Meßkanal und gegebenenfalls auch das Kühlrohr können vorzugsweise in einem temperaturfesten Block vorgesehen sein und sind somit gemeinsam im Block als Einheit an der Schmelzgefäßwand anbringbar. Dies erleichtert die Handhabung und stellt auch einen Schutz des Meß- und Kühlkanals bei der Montage bereit. Eine zusätzliche, gleitverschiebliche Anordnung des Meßkanals und gegebenenfalls des Kühlrohrs in dem temperaturfesten Block erleichtert eine Nachführung des Meßrohrs im Falle eines Abbrands und ermöglicht auch optional eine Verschiebung des Meßrohrs, und gegebenenfalls des Kühlrohrs, derart, daß diese aus der Innenseite der Schmelzgefäßwand vorstehen und direkt in die Schmelze eingetaucht sind. Die Eintauchtiefe läßt sich hierbei variieren. Im Normalfall schließen jedoch Meßkanal und Kühlrohr im wesentlichen bündig mit der Innenoberfläche der Schmelzgefäßwandung ab.

Der temperaturfeste Block besteht vorzugsweise aus keramischen Material, Magnesit oder Magnesit/Graphit und zeichnet sich in diesem Fall durch sehr hohe Temperaturbeständigkeit aus.

In bevorzugter Ausgestaltung sind der Meßkanal, und soweit vorhanden auch das Kühlrohr, schräg abfallend in der Wandung des Schmelzgefässes eingebaut, so daß sie an der Innenseite der Schmelzgefäßwandung tiefer liegen als in den weiter außen befindlichen Bereichen. Hierdurch wird ein Eindringen von Schmelze, Schlacke oder anderen Bestandteilen in den Meßkanal erschwert und ein Fließen solcher Partikel in Richtung zum entfernten Temperatursensor verhindert. Es läßt sich somit problemlos erreichen, daß der Meßfleck direkt in der Schmelze, d. h. unterhalb des Schmelzen- und Schlackenspiegels liegt und der eigentliche Temperatursensor dennoch niveaumäßig höher angeordnet ist als der Schmelzen- bzw. Schlackenspiegel.

Die Erfindung umfaßt auch ein Schmelzgefäß, in das die Temperaturmeßvorrichtung gezielt, vorzugsweise im Untergefäß in einer feuerfesten Ummauerung, eingebaut ist.

Weiterhin wird mit der Erfindung ein Verfahren zur Temperaturmeßung von Hochtemperatur-Schmelzen geschaffen, bei dem der berührungslos abgetastete Meßfleck innerhalb der Schmelze liegt und somit die Temperaturmessung nicht durch Oberflächeneffekte wie etwa kühlere Schlackenpartikel verfälscht wird.

Die Erfindung wird nachstehend von Ausführungsbeispielen unter Bezugnahme auf die Zeichnungen näher erläutert. Es zeigen:
- Fig. 1: ein Ausführungsbeispiel der Temperaturmeßvorrichtung in Verbindung mit deren Anwendung bei einem Schmelzgefäß eines Lichtbogenofens und
- Fig. 2: eine vergrößerte Darstellung des Ausschnitts A in Fig. 1.

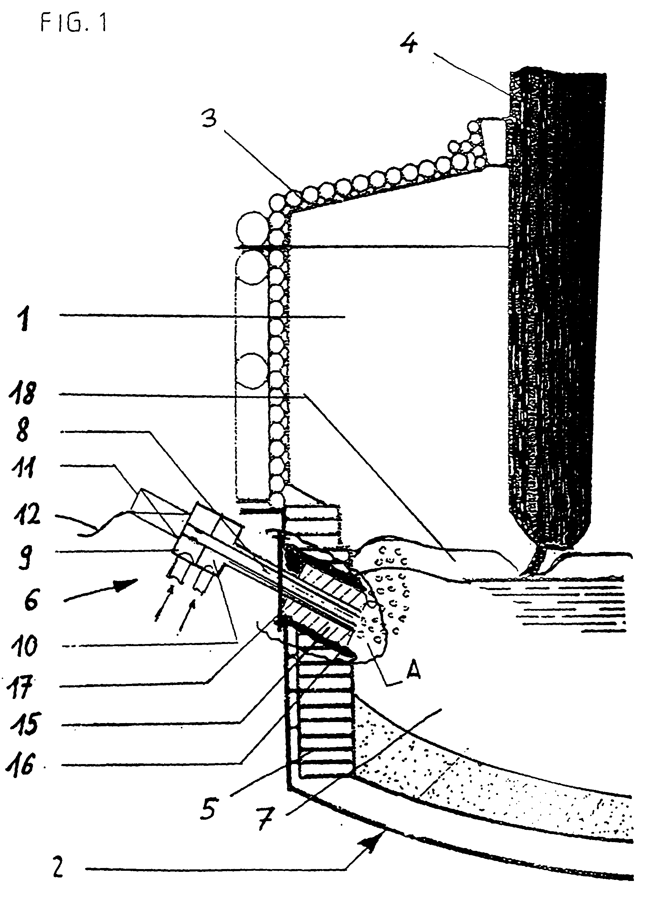

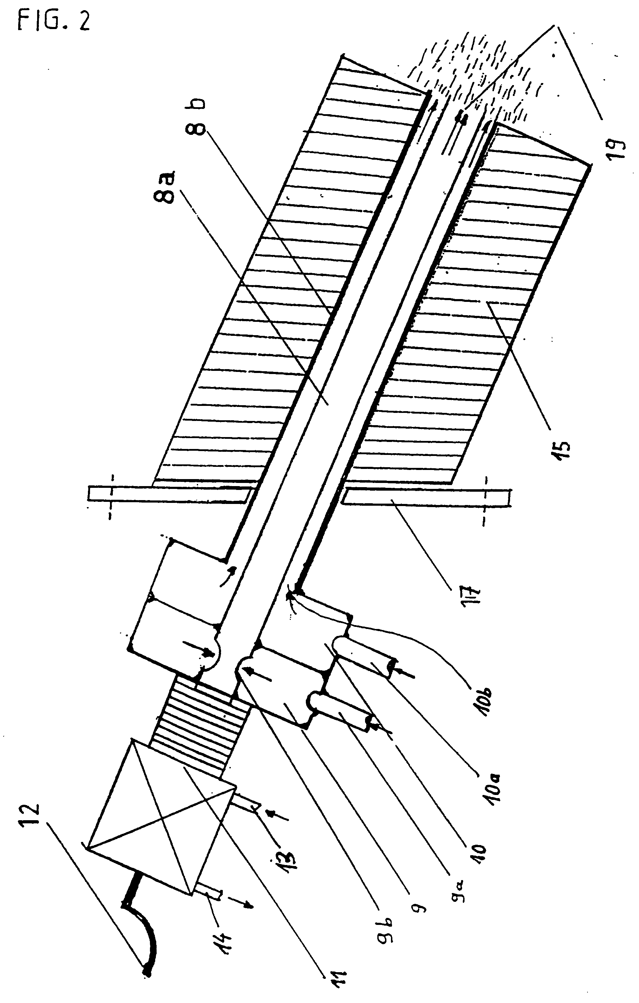

Fig. 1 zeigt ein Ausführungsbeispiel der Temperaturmeßvorrichtung und eines hiermit ausgestatteten Schmelzgefäßes in Form eines Lichtbogenofens. Die allgemein mit dem Bezugszeichen 6 bezeichnete Temperaturmeßvorrichtung ist in der Seitenwand des Lichtbogenofens angeordnet, der aus einem Obergefäß 1, einem Untergefäß 2 und einem Deckel 3 besteht. Durch den Deckel 3 sind eine oder mehrere Lichtbogenelektroden 4 zur Erzeugung der Schmelzwärme durchgeführt. Das Untergefäß 2 enthält die flüssige Schmelze 7, deren Temperatur zu messen ist, und ist in bekannter Weise mit einer feuerfesten Ausmauerung 5 versehen. Durch die Ausmauerung 5 ist ein konzentrisches Rohrsystem 8 der Temperaturmeßvorrichtung 6 hindurch geführt, das mit einem Einlaß und einer Verteilerkammer 9 für ein Inertgas bzw. für Preßluft sowie mit einem Einlaß und einer Verteilerkammer 10 für ein Kühlfluid bzw. Preßluft versehen ist. Am einen Ende eines Innenrohrs 8a des konzentrischen Rohrsystems 8 ist außerhalb des Schmelzgefäßes ein gekühulter Meßkopf 11 mit Infrarotsensor und Anschlußkabel 12 vorgesehen. Die Kühlung des Meßkopfes 11 erfolgt durch ein Kühlfluid, insbesondere Luft oder Wasser, das über einen Einlaß 13 (Fig. 2) in den Meßkopf eingeleitet und aus einem Auslaß 14 (Fig. 2) wieder abgeführt wird.

Ebenso wie der Temperaturmeßkopf 11 sind auch die Einlässe und Verteilerkammern 9, 10 außerhalb des Schmelzgefäßes angeordnet und somit für Montage- und Wartungszwecke gut zugänglich.

Das konzentrische Rohrsystem 8 ist in einen durchbohrten Blockstein 15 aus Magnesit oder Magnesit/Graphit eingesetzt, der mittels einer feuerfesten Stampfmasse 16 in der feuerfesten Ausmauerung 5 gehalten ist.

Die erfindungsgemäße Meßvorrichtung wird durch eine Halteplatte 17 gehalten, die z. B. aus Metall besteht und an der Außenwandung des Untergefäßes 2 angebracht, insbesondere mit der Wandung verschraubt ist.

Auf der Schmelze befindet sich eine Schlackenschicht 18. Wie aus den Fig. 1 und 2 ersichtlich ist, liegt der Meßfleck 19, dessen Temperatur durch den berührungslos arbeitenden Temperaturmeßsensor im Meßkopf 11 gemessen wird, unterhalb des Schmelzenspiegels und der Schlackenschicht 18 direkt in der Schmelze, so daß eine sehr genaue Temperaturmessung der wahren Schmelzentemperatur erzielt wird. Die schmelzenseitige Austrittsöffnung des Innenrohrs 8a des konzentrischen Rohrsystems 8 und damit des Meßkanals, d. h. die Höhe der Meßflecklage, ist so gewählt, daß sie unterhalb des oberen Rands der Ausmauerung 5 liegt und vorzugsweise im mittleren Drittel der Vertikalerstreckung der Ausmauerung 5 angeordnet ist. Weiterhin ist die Temperaturmeßvorrichtung schräg abfallend in der Ausmauerung angeordnet, wie dies aus den Fig. 1 und 2 ersichtlich ist. Der Winkel, der zwischen der horizontalen Ebene und der Mittelachse der Temperaturmeßvorrichtung eingeschlossen ist, liegt vorzugsweise zwischen mehr als 0 und 45° und beträgt beim Ausführungsbeispiel ca. 30°.

In Fig. 2 ist der in Fig. 1 gezeigte Ausschnitt A in vergrößerter Darstellung, jedoch ohne die Ausmauerung 5 und die Stampfmasse 16, gezeigt.

Das konzentrische Rohrsystem 8 weist das Innenrohr 8a auf, dessen Innenraum den Meßkanal bildet und das aufgrund der kompakten und kurzen Bauweise der Meßvorrichtung vorzugsweise einen Innendurchmesser von 8 bis 12 mm und eine Wandstärke von vorzugsweise 2 mm besitzt. Das innere Rohr 8a ist konzentrisch von einem Außenrohr 8b umgeben, das als Kühlrohr dient und einen Ringspalt zur Führung des Kühlfluids ausbildet. Das Rohr 8b weist einen Innendurchmesser von vorzugsweise 18 bis 22 mm und eine Wandstärke vorzugsweise von 4 mm auf. Die Verteilerkammer 9 zur Zuführung des Inertgases ist mit einer Zuführleitung 9a versehen und steht mit dem Meßkanal über Öffnungen 9b im inneren Rohr 8a in Verbindung. In gleichartiger Weise ist die Verteilerkammer 10 für das Kühlfluid mit einer Einlaßleitung 10a versehen und steht mit dem Kühlrohr 8b über eine Ringöffnung 10b in Verbindung. Der Infrarot-Meßsensor befindet sich am Ende des inneren Rohrs 8a und im Inneren des Schutzgehäuses 11, das über den Einlaß und Auslaß 10, 14 mit Kühlwasser gespeist wird, um die Temperatur des Meßkopfes auf niedrigem Niveau zu halten. Der Infrarotmeßkopf ist über die Leitungen 12 mit einem nicht dargestellten digitalen oder analogen Anzeigegerät und/oder mit einer Prozeßsteuerung IPC verbunden, über die die vom Infrarotsensor abgegebenen elektrischen Signale weitergeleitet werden. Der feuerfeste Blockstein bzw. Block 15 weist einen Durchmesser von vorzugsweise etwa 200 mm auf und ist vorzugsweise mittig mit einem Längsloch versehen, das zur Aufnahme des konzentrischen Rohrsystems dient und dessen Durchmesser dem Außendurchmesser des Rohrsystems entspricht. Bei einem alternativen Ausführungsbeispiel kann sich zwischen dem Außenrohr 8b und dem Block 15 eine Schicht aus einem Gleitmittel, insbesondere Graphitpulver, befinden (nicht gezeigt), so daß sich das Rohrsystem und damit das gesamte Meßsystem bei einem Abbrand gleitend nachschieben läßt. Der Block 15 ist in der feuerfesten Ausmauerung 16 des Gefäßes eingestampft.

Da das offene Ende des Meßkanals direkt in der Schmelze liegt, ist der Meßfleck 19, der unmittelbar vor der Meßkanalöffnung liegt, verhältnismäßig klein und entspricht in seinem Durchmesser dem Innendurchmesser des inneren Rohrs 8a. Aufgrund der geringen Rohrdurchmesser ergibt sich weiterhin ein entsprechend geringer Durchsatz an Inertgas und Kühlfluid, so daß der Verbrauch dieser Fluide vorteilhafterweise relativ gering ist.

In der Phase, in der sich Schmelze vor dem Rohrsystem 8 befindet, wird über die Verteilerkammer 9 Stickstoff als Inertgas mit einem Druck von vorzugsweise etwa 4 bar und einem Durchsatz von etwa 40 Nm³/H zugeführt, das den Meßkanal 8a durchströmt und in die Schmelze strömt und blasenförmig durch diese hindurch zur Oberfläche aufsteigt.

Über die Verteilerkammer 10, den Einlaß 10a und die Ringöffnung 10b wird ein Kühlfluid, vorzugsweise ein Kohlenwasserstoff-Gas, durch den Kühlkanal geleitet, der durch die Außenwandung des Innenrohrs 8a und die Innenwandung des Außenrohrs 8b gebildet ist. Das Kühlfluid strömt, ebenso wie das Inertgas in dem Innenrohr 8a, in axialer Richtung und tritt aus dem der Schmelze zugewandten, offenen Ende des Kühlkanals in die Schmelze aus. Das Kühlfluid wird mit Überdruck von vorzugsweise etwa 4 bar und beispielsweise 60 Nm³/h geführt. Das Kühlfluid kann z. B. Propan sein. In den Schmelznebenphasen, z. B. in der Abstich-, Flick-, Chargier- und zu Beginn der Schmelzphase, kann der Stickstoff im Meßkanal 8a durch Preßluft ersetzt werden. Dies erfolgt durch Umschalten einer nicht dargestellten Ventilanordnung, die mit einer Preßluftquelle einerseits und einer Inertgasquelle, z. B. Stickstoffquelle andererseits eingangsseitig verbunden ist und die jeweils ausgewählte Fluidquelle mit dem Einlaß 9a, der Verteilerkammer 9 und damit mit dem Meßkanal 8a verbindet. Der Druck und die Menge können hierbei auch nach dem Umschalten beibehalten werden und somit den vorstehend genannten Werten entsprechen. Der Druck und die Menge sind aber gegebenenfalls auch an die individuellen Bedingungen anzupassen. Auch das Kühlfluid (Propan) kann, vorzugsweise nach einem Spülen mit Inertgas (z. B. Stickstoff), durch Preßluft ersetzt werden. Gegen Ende der Einschmelzperiode des letzten Schrottsatzes wird dann wieder auf Stickstoff und Propan umgestellt, so daß eine sehr genaue Messung erzielbar ist. Hierbei stabilisieren sich die Meßergebnisse der Meßsonde mit dem Einschmelzgrad der Charge.

Zur Steuerung der Zufuhr der einzelnen Gase und Kühlfluide wird vorzugsweise ein herkömmlicher Steuerstand mit Regelventilen als Ventilanordnung eingesetzt.

Als Kühlgas im Kühlkanal 8b kann anstelle von Kohlenwasserstoffen (Cx.Hy) wie Naturgas oder Propan, (flüssiges) Kohlendioxid CO₂ und/oder Aerosole eingesetzt werden. Diese bestehen oftmals aus einem Inertgas (Argon, Stickstoff, Kohlendioxid) mit einem Wassernebel. Das Kühlfluid, das unter Druck durch den ringförmigen Kühlkanal geblasen wird, schützt das gesamte Rohrsystem und auch das dieses umgebende feuerfeste Material vor zu hohen Temperaturen und auch vor einem Eindringen von Schmelze und/oder Schlacke. Die Kühlwirkung wird hierbei durch eine Temperaturerhöhung des Fluids, durch Dissoziation und durch Phasenübergang erreicht. Gleichzeitig erfährt die flüssige Schmelze eine Rührwirkung, die zu einem Konzentrations- und Temperaturausgleich führt.

Bei der Erfindung Findet somit eine kontinuierliche, berührungslose Temperaturmessung einer Temperatur-Schmelze statt, bei der die wahre Temperatur kontinuierlich über einen Meßkopf mit Infrarotsensor gemessen wird, der über das fluidgekühlte, konzentrische Rohrsystem 8 mit einem in der Schmelze liegenden Meßfleck in Verbindung steht. Der Meßkopf 11 ist hierbei mit einem nicht dargestellten Anzeigegerät und, über geeignete Schnittstellen, mit einer Prozeßsteuereinrichtung IPC zur Prozeßsteuerung verbunden. Die erfindungsgemäße Vorrichtung und das erfindungsgemäße Verfahren können in Schmelz-, Feinungs- und Haltegefäßen für die Stahlherstellung angewandt werden. Die Erfindung kann aber auch bei anderen schmelzflüssigen Metallen oder Nicht-Metallen zu deren Temperaturerfassung zum Einsatz kommen.

Das Rohrsystem, das aus dem Innenrohr 8a zur Meßfleckerfassung und dem äußeren Rohr 8b zur Fluidkühlung im Ringspalt besteht, ist vorzugsweise aus Stahl hergestellt. Der Innendurchmesser des inneren Rohrs 8a liegt bei 3 bis 25 mm, vorzugsweise bei 12 mm, bei einer Wandstärke von 2 bis 3 mm. Der Durchmesser des Außenrohrs 8b hängt vom Durchmesser des Innenrohrs 8a ab. Sein Innendurchmesser kann vorzugsweise zwischen 13 und 35 mm liegen, so daß sich eine Ringspaltbreite von beispielsweise 3 mm ergibt. Die Wandstärke des äußeren Rohrs 8b liegt bei 2 bis 6 mm. Zwischen dem Innenrohr 8a und dem äußeren Rohr 8b sind nicht dargestellte Abstandshalter zur Aufrechterhaltung der konzentrischen Anordnung vorgesehen, die derart ausgelegt sind, daß sie die Strömung des Kühlfluids nicht nennenswert behindern.

Der notwendige Druck der durch die Rohre 8a, 8b strömenden Gase hängt auch von der Höhe der Metallsäule über dem Meßfleck 19 und der Reibung der Gase im Rohrsystem ab. Bei flacheren Schmelzen, z. B. bei einem Lichtbogenofen, wird mit einem Druck von 3 bis 7 bar gearbeitet.

Das durch das innere Rohr 8a strömende Fluid bewirkt ein Freihalten dieses Rohrs 8a, wobei inertes Gas wie Stickstoff benutzt wird, solange Schmelze vor dem Rohrende (d. h. dem Meßfleck) steht. Hierdurch wird vermieden, daß der Meßfleck oxidiert, was zu Verfälschungen des Meßwerts führen könnte. In den Schmelznebenphasen wie etwa dem Abstechen, Flicken, Chargieren oder Schmelzen kann anstelle des inerten Gases auch zur Kostenminimierung Preßluft oder CO₂ verwendet werden. Zum Freihalten des Kühl-Ringspaltes zwischen den Rohren 8a und 8b und zur Kühlung werden vorteilhafterweise Kohlenwasserstoffe und/oder Kohlendioxid eingesetzt, wobei die Durchsatzmenge von den Rohrdurchmessern abhängig ist.

Das Rohrsystem 8 kann auch direkt in der Wand des Schmelzgefäßes ohne eigenen Einsatzblock eingestampft werden. Vorzugsweise wird jedoch der keramische Block 15 verwendet, der einerseits in der Gefäßwand eingestampft ist. Der Block 15 weist vorzugsweise einen Durchmesser oder einen Querschnitt mit einem Durchmesser von ca. 200 mm oder einer Seitenlänge von 200 mm sowie eine Länge auf, die der Wandstärke des Gefäßes unter zusätzlicher Berücksichtigung der schrägen Anordnung des Blocks in der Gefäßwand angepaßt ist. Als Blockmaterial kann hochreines Magnesit oder auch graphithaltiges Magnesit eingesetzt werden. Der Block 15 ist zur Einführung des Rohrsystems 8 in seiner Mitte in Längsrichtung durchbohrt. Das Rohrsystem kann in dem Block 15 auch gleitend, z. B. unter Einbringung von Graphitpulver zwischen dem Rohrsystem 8 und dem Block 15, eingesetzt sein, so daß es bei Verschleiß einfach nachgeschoben werden kann.

Der Meßkanal der Temperaturmeßvorrichtung ist somit, wie vorstehend erläutert, mit einer Kühleinrichtung versehen, zum Beispiel von einem Kühlrohr umgeben, wobei der insbesondere als Rohr ausgebildete Meßkanal und das Kühlrohr konzentrisch angeordnet sein können.

Mit dem Meßkanal steht vorzugsweise mindestens eine Fluidquelle zur Durchströmung des Meßkanals mit einem in das Schmelzgefäß austretenden Fluid in Verbindung.

Dabei können mindestens zwei Fluidquellen über eine steuerbare Ventilanordnung mit dem Meßkanal verbindbar sein, wobei eine der Fluidquellen zum Beispiel ein Inertgas, ins-besondere Stickstoff, und eine andere Fluidquelle Preßluft bereitstellen kann.

Die Ventilanordnung kann in Abhängigkeit von der jeweiligen Schmelzphase gesteuert werden, wobei eine Steuereinrichtung die Ventilanordnung vorzugsweise insbesondere in den Schmelznebenphasen auf Zufuhr von Preßluft zum Meßkanal umstellen kann.

Auch das Kühlrohr kann mit mindestens einer Fluidquelle in Verbindung stehen oder über eine steuerbare Ventilanordnung mit mindestens zwei Fluidquellen verbindbar sein, wobei eine der Fluidquellen ein Kühlfluid, insbesondere Propan, und eine andere Fluidquelle Preßluft bereitstellt.

Vorzugsweise steuert eine Steuereinrichtung die Ventilanordnung in Abhängigkeit von der jeweiligen Schmelzphase, zum Beispiel derart, däß die Ventilanordnung insbesondere in den Schmelznebenphasen auf Zufuhr von Preßluft umgestellt wird.

Der Meßkanal kann die Seitenwand des Schmelzgefäßes durchsetzen, wobei die Länge des Meßkanals, und gegebenenfalls des Kühlrohrs, zum Beispiel länger ist als die Wandung des Schmelzgefäßes, und der Temperatursensor außerhalb der Wandung des Schmelzgefäßes angeordnet ist, und der Meßkanal, und gegebenenfalls das Kühlrohr, in einen temperaturfesten Block eingesetzt sein kann.

Der Block kann aus keramischen Material bestehen und den Meßkanal, gegebenenfalls gemeinsam mit dem Kühlrohr, gleitverschieblich aufnehmen. Der Block kann hierbei z.B. aus Magnesit oder Magnesit/Graphit bestehen.

Der Meßkanal, und gegebenenfalls das Kühlrohr, können schräg abfallend in der Wandung des Schmelzgefäßes und/oder im unteren Bereich bzw. in der unteren Hälfte der Wandung eingebaut sein.

Das erfindungsgemäße Schmelzgefäß enthält vorzugsweise ein Obergefäß und ein Untergefäß, wobei die Temperaturmeßvorrichtung im Untergefäß angebracht sein kann, zum Beispiel in der feuerfesten Ummauerung oder in einem temperaturfesten Block, der den Meßkanal, und gegebenenfalls den um den Meßkanal herum angeordneten Kühlkanal, umgibt und in der Ummauerung angeordnet ist.

Bei dem erfindungsgemäßen Verfahren zur Temperaturmessung von Hochtemperatur-Schmelzen in dem Schmelzgefäß wird der Bereich zwischen dem Temperatursensor und dem Meßfleck vorzugsweise gekühlt, zum Beispiel durch ein Kühlfluid, das an der Außenwandung eines zwischen dem Temperatursensor und dem Meßfleck vorhandenen Meßkanals entlang streicht.

In den Schmelznebenphasen kann das Kühlfluid durch Preßluft ersetzt werden.

Der Bereich zwischen dem Temperatursensor und dem Meßfleck wird vorzugsweise durch ein strömendes Fluid von Schmelze frei gehalten, das ein Inertgas sein kann.

In den Schmelznebenphasen kann das Inertgas durch ein anderes Fluid, insbesondere Preßluft, ersetzt werden.

Die Temperatur kann kontinuierlich gemessen werden. Das vom Temperatursensor erzeugte Temperaturmeßsignal kann zur Steuerung des Schmelzprozesses oder Schmelzbehandlungsprozesses ausgewertet werden.

## Patentansprüche

1. Temperaturmeßvorrichtung zur Temperaturmessung von Hochtemperatur-Schmelzen in einem Schmelzgefäß, mit einem zum Inneren des Schmelzgefäßes offenen, insbesondere fluiddurchströmten Meßkanal und einem berührungslos arbeitenden Temperatursensor, der an oder in dem Meßkanal mit Abstand zu dessen dem Schmelzgefäß zugewandten Öffnung angeordnet ist.

2. Temperaturmeßvorrichtung nach Anspruch 1, dadurch **gekennzeichnet,** daß der Temperatursensor ein Pyrometer und insbesondere ein optischer Sensor, vorzugsweise ein Infrarot-Sensor ist, und einen in der Schmelze, vorzugsweise unterhalb einer eventuellen Schlackenschicht liegenden Meßfleck mißt.

3. Temperaturmeßvorrichtung nach Anspruch 1 oder 2, dadurch **gekennzeichnet,** daß der Meßkanal von einem insbesondere konzentrisch angeordneten Kühlrohr umgeben ist.

4. Temperaturmeßvorrichtung nach einem der vorhergehenden Ansprüche, dadurch **gekennzeichnet,** daß mindestens zwei Fluidquellen über eine steuerbare Ventilanordnung mit dem Meßkanal verbindbar sind.

5. Temperaturmeßvorrichtung nach einem der Ansprüche 1 bis 4, **gekennzeichnet** durch mindestens zwei Fluidquellen, die über eine steuerbare Ventilanordnung mit dem Kühlrohr verbindbar sind.

6. Temperaturmeßvorrichtung nach Anspruch 4 oder 5, **gekennzeichnet** durch eine Steuereinrichtung zur Steuerung der Ventilanordnung in Abhängigkeit von der jeweiligen Schmelzphase.

7. Temperaturmeßvorrichtung nach Anspruch 6, dadurch **gekennzeichnet,** daß die Steuereinrichtung die Ventilanordnung insbesondere in den Schmelznebenphasen auf Zufuhr von Preßluft umstellt.

8. Temperaturmeßvorrichtung nach einem der vorhergehenden Ansprüche, dadurch **gekennzeichnet,** daß die Länge des Meßkanals, und gegebenenfalls des Kühlrohrs, länger ist als die Wandung des Schmelzgefäßes, und der Temperatursensor außerhalb der Wandung des Schmelzgefäßes angeordnet ist.

9. Temperaturmeßvorrichtung nach einem der vorhergehenden Ansprüche, **gekennzeichnet** durch einen temperaturfesten Block, in den der Meßkanal, und gegebenenfalls das Kühlrohr, eingesetzt ist.

10. Temperaturmeßvorrichtung nach Anspruch 9, dadurch **gekennzeichnet,** daß der Meßkanal, gegebenenfalls gemeinsam mit dem Kühlrohr, gleitverschieblich in dem Block angeordnet ist.

11. Temperaturmeßvorrichtung nach einem der vorhergehenden Ansprüche, dadurch **gekennzeichnet,** daß der Meßkanal, und gegebenenfalls das Kühlrohr, schräg abfallend in der Wandung des Schmelzgefäßes und/oder im unteren Bereich bzw. in der unteren Hälfte der Wandung eingebaut sind.

12. Schmelzgefäß mit einer Temperaturmeßvorrichtung gemäß einem der vorhergehenden Ansprüche, dadurch **gekennzeichnet,** däß die Temperaturmeßvorrichtung derart in der Gefäßwand eingebaut ist, daß die Meßkanal-Öffnung unterhalb des maximalen Niveaus des Schmelzenpegels der Hochtemperaturschmelze liegt.

13. Verfahren zur Temperaturmessung von Hochtemperatur-Schmelzen in einem Schmelzgefäß, dadurch **gekennzeichnet,** daß ein berührungslos arbeitender Temperatursensor eingesetzt wird, der die Temperatur eines in der Schmelze befindlichen Meßflecks mißt.

14. Verfahren nach Anspruch 13, dadurch **gekennzeichnet,** daß der Bereich zwischen dem Temperatursensor und dem Meßfleck von Schmelze freigehalten und/oder gekühlt wird.

15. Verfahren nach Anspruch 14, dadurch **gekennzeichnet,** daß die Meßfleck-Freihaltung und/oder die Kühlung durch ein Fluid erfolgt, das an der Außenwandung eines zwischen dem Temperatursensor und dem Meßfleck vorhandenen Meßkanals entlang streicht.

16. Verfahren nach Anspruch 15, dadurch **gekennzeichnet,** daß das Fluid in den Schmelznebenphasen durch Preßluft ersetzt wird.
